Europäisches Patentamt

(19)    European Patent Office

        Office européen des brevets

(11)    **EP 0 674 578 B1**

## (12)    EUROPEAN PATENT SPECIFICATION

(45) Date of publication and mention
of the grant of the patent:
**22.09.1999 Bulletin 1999/38**

(21) Application number: **93901185.4**

(22) Date of filing: **17.12.1992**

(51) Int. Cl.$^6$: **B29C 44/00**, C08F 110/06

(86) International application number:
**PCT/US92/10933**

(87) International publication number:
**WO 94/13459 (23.06.1994 Gazette 1994/14)**

(54) **EXTRUDED CLOSED-CELL PROPYLENE POLYMER FOAM**

EXTRUDIERTER POLYPROPYLENSCHAUM MIT GESCHLOSSENEN ZELLEN

MOUSSE EXTRUDEE DE POLYPROPYLENE A ALVEOLES FERMEES

(84) Designated Contracting States:
**AT BE CH DE DK ES FR GB GR IE IT LI NL SE**

(43) Date of publication of application:
**04.10.1995 Bulletin 1995/40**

(73) Proprietor:
**THE DOW CHEMICAL COMPANY
Midland, Michigan 48674 (US)**

(72) Inventors:
 • **PARK, Chung, P.
Pickerington, OH 43147 (US)**
 • **MALONE, Bruce, A.
Granville, OH 43023 (US)**

(74) Representative:
**Casalonga, Axel et al
BUREAU D.A. CASALONGA - JOSSE
Morassistrasse 8
80469 München (DE)**

(56) References cited:

| EP-A- 0 287 011 | EP-A- 0 291 764 |
| DE-A- 4 201 763 | US-A- 3 298 706 |
| US-A- 3 637 458 | US-A- 4 323 528 |
| US-A- 4 424 287 | US-A- 4 522 955 |
| US-A- 4 714 716 | US-A- 4 725 466 |
| US-A- 4 824 720 | US-A- 4 940 736 |
| US-A- 5 116 881 | US-A- 5 180 751 |

 • **DATABASE WPI Week 8741 Derwent
   Publications Ltd., London, GB; AN 87-288531 &
   JP-A-62 201 942 (SEKISUI PLASTICS KK) , 5
   September 1987**
 • **DATABASE WPI Week 8739 Derwent
   Publications Ltd., London, GB; AN 87-274751 &
   JP-A-62 192 430 (NIPPON STYRENE PAPE) , 24
   August 1987**

**Description**

The present invention relates to extruded closed-cell propylene polymer foam.

The polypropylene foam of the present invention has uniform and fine closed cell structure.

Since polypropylene generally has a high crystallinity and a low melt viscosity and is difficult to cross-link, it has hitherto been quite difficult to obtain a highly expanded product therefrom. One such kind of product is radiation-crosslinked foam-sheet.

However, since polypropylene is superior to polyethylene in heat resistance, polypropylene is expected to become useful in the field requiring a heat resistance of 100 degrees centigrade or higher, such as heat-insulating material for hot water piping, if a highly expanded product can be obtained therefrom with relative inexpensiveness by the non-crosslinking extrusion foaming process similarly to polyethylene.

Also, the foamed closed-cell polypropylene products of the present invention have good cushioning properties at low densities.

Closed-cell polypropylene foams, like polyethylene foams, could be widely employed in the field of packaging in order to provide cushion properties. Fragile objects intended to be transported may be encased and supported in a closed cell foamed polypropylene cushion adapted to conform to the external shape of the object for which protection is desired. One consideration when providing cushioning is shipping costs. Larger thicknesses of cushioning foam result in excess packaging sizes and concomitant elevated shipping costs. So it is desirable to reduce density of the cushioning material to a minimum while retaining the necessary cushioning properties.

In United States Patent 4,522,955 (Great Britain 2,099,434) there is disclosed an extrusion process for highly expanded polypropylene resin foams. These specific polypropylene resin foams use a polypropylene resin having at a stated temperature a minimum value of melt tension and a stated upper limit for a maximum/minimum ratio of melt tension. More specifically, for this non-crosslinking extrusion process, in addition to the ingredients of polypropylene resin and volatile foaming agent, it is required that a nucleus-forming agent, such as inorganic substances, carbon dioxide generators, inorganic or organic acids and thermal decomposition type chemical foaming agents, be included as part of the mixture to form the polypropylene resin foams of this disclosure.

The present invention is directed to extruded closed-cell propylene polymer resin foams, produced with and without a nucleus-forming agent.

The present invention discloses extrusion methods of making these closed-cell propylene polymer resin foams with and without a nucleus-forming agent.

The present invention is directed to an extruded, dimensionally stable, closed cell propylene polymer foam comprising a propylene polymer resin having a melt flow index of less than 10 decigrams/minute at 230° C, the foam having a density of less than 80 kilograms per cubic meter (5 pounds per cubic foot), the foam having greater than 80 percent closed cells, the foam being characterized in that it has a foamability characteristic (F) of less than or equal to 1.8, the foam having a minimal cross sectional area of at least 32.3 square centimeters (5 square inches), the foam having a minimal thickness dimension of a least 12.7 millimeters, the foam being a plank foam.

The present application also discloses processes for making such closed-cell foamed propylene polymer resin. The process consists of feeding a propylene polymer resin, having a melt flow index less than 10 decigrams/minute at 230 degrees centigrade into a continuous melting device to form a propylene polymer resin melt, then adding the volatile foaming or blowing agent(s) into the melted propylene polymer resin, uniformly mixing the blowing agent and melted resin to form a mixture, cooling the mixture to a foam forming temperature, discharging the mixture into a zone of lower pressure and forming the closed-cell foamed propylene polymer resin product having a foamability characteristic (F) of less than or equal to 1.8.

A similar method for producing a closed-cell lightly crosslinked towed propylene polymer resin includes the step of feeding azido functional silanes, vinyl functional silanes, organic peroxides, multifunctional vinyl monomers or mixtures of these compounds as a crosslinking agent into the melted resin.

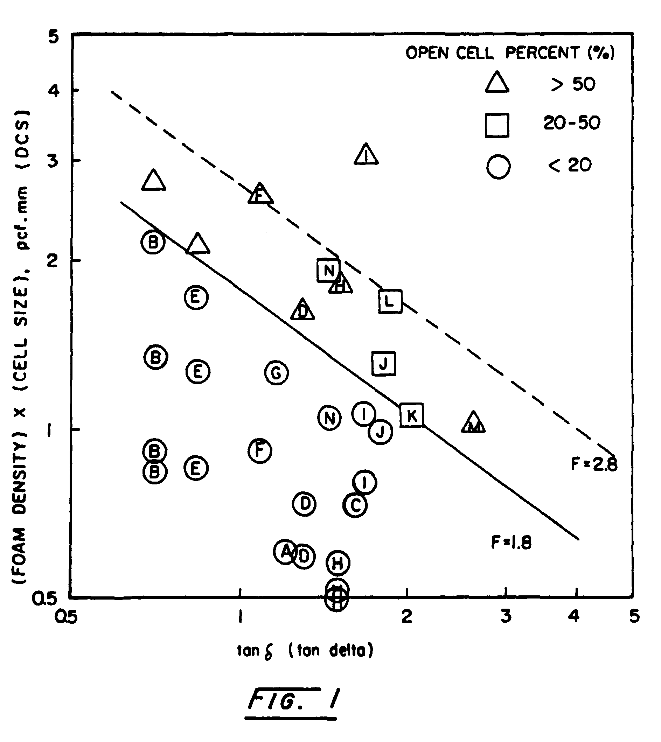

Figure 1 shows the relationship between foam density, cell size and tan delta for making a closed-cell foam using the resins listed in Table Ia.

The closed-cell propylene polymer resin foams of the present invention are those foams having a density of less than 5 pounds per cubic foot (80 kg/m$^3$). Preferably these foams have a cell size less than 4 millimeters (mm) and greater than 0.05 mm.

These foams may be prepared in a conventionally known manner by feeding, into an extruder, a propylene polymer resin having a melt flow index less than 10 decigrams/minute, optionally adding a nucleating agent, melting and plasticizing the propylene polymer resin, thereafter feeding a volatile foaming agent, uniformly mixing the materials, and then extruding the mixture to a low pressure zone while cooling it and forming a propylene polymer resin foam product.

Other suitable processes are a coalesced foam process as described in United States Patent Number 4,824,720 and an accumulating extrusion process described in United States Patent Number 4,323,528.

United States Patent Number 4,824,720 describes a method for providing a closed cell foam structure comprising a plurality of coalesced extruded strands or profiles by extrusion foaming of a molten thermoplastic composition utilizing a die containing a multiplicity of orifices. The orifices are arranged such that the contact between adjacent streams of the molten extrudate occurs during the foaming process and the contacting surfaces adhere to one another with sufficient adhesion to result in a unitary structure. The individual strands of coalesced polyolefin foam should remain adhered into a unitary structure to prevent strand delamination under stresses encountered in preparing, shaping, and using the foam.

United States Patent Number 4,323,528 describes an accumulating extrusion process. In this accumulating extrusion process low density, elongated cellular bodies having large lateral cross-sectional areas are prepared by: 1) forming, under pressure, a mixture of a thermoplastic polymer and a blowing agent, with the mixture having a temperature at which the viscosity of the mixture is sufficient to retain the blowing agent when the mixture is allowed to expand; 2) extruding the mixture into a holding zone maintained at a temperature and pressure which does not allow the mixture to foam, the holding zone having an outlet die defining an orifice opening into a zone of lower pressure at which the mixture foams, and an openable gate closing the die orifice; 3) periodically opening the gate; 4) substantially concurrently applying mechanical pressure by a movable ram on the mixture to eject the mixture from the holding zone through the die orifice into the zone of lower pressure, at a rate greater than that at which substantial foaming in the die orifice occurs and less than that at which substantial irregularities in cross-sectional area or shape occurs; and 5) permitting the ejected mixture to expand unrestrained in at least one dimension to produce an elongated thermoplastic cellular body.

Finally, US-A- 5 116 881 relates processes for making propylene polymer structures in sheet form instead of foam structures of relatively large dimension or cross-section (at least about 5 square inches) as in the present invention. It further does not relate processes for making foam structures of large dimension with a foamability characteristic of less than or equal to about 1.8.

As used herein, "propylene polymer material" means propylene polymer material selected from the group consisting of (a) homopolymers of propylene, (b) random and block copolymers of propylene and an olefin selected from the group consisting of ethylene, $C^4$-$C^{10}$ 1-olefins, and $C^4$-$C^{10}$ dienes, provided that, when said olefin is ethylene, the maximum polymerized ethylene content is less than 20 percent by weight, when said olefin is a $C^4$-$C^{10}$ 1-olefin, the maximum polymerized content thereof is less than 20 percent by weight, and when said olefin is a $C^4$-$C^{10}$ diene, the maximum polymerized content thereof is less than 20 percent by weight, and (c) random terpolymers of propylene and 1-olefins selected from the group consisting of ethylene and $C^4$-$C^8$ 1-olefins, provided that the maximum polymerized $C^4$-$C^8$ 1-olefin content is less than 20 percent by weight, and when ethylene is one of said 1-olefins, the maximum polymerized ethylene content is less than 20 percent by weight. The $C^4$-$C^{10}$ 1-olefins include the linear and branched $C^4$-$C^{10}$ 1-olefins such as, for example, 1-butene, isobutylene, 1-pentene, 3-methyl-1-butene, 1-hexene, 3,4-dimethyl-1-butene, 1-heptene, 3-methyl-1-hexene. Examples of $C^4$-$C^{10}$ dienes include 1,3-butadiene, 1,4-pentadiene, isoprene, 1,5-hexadiene, 2,3-dimethyl-1,3-hexadiene. The propylene polymer material must have at least eighty percent (80 percent) polypropylene in the propylene polymer material.

Apart from the above, other polymeric substances with the above-mentioned polypropylene type resins, such as high- and low-density polyethylenes, polybutene-1, ethylene-vinyl acetate copolymer, ethylene-propylene rubber, styrene-butadiene rubber, ethylene-ethyl acrylate copolymer, ionomer, may be mixed into the above-mentioned polypropylene type resins either alone or in the form of a blend of two or more polymers, so long as polypropylene is the main component in the resulting mixture and the mixture is of uniform quality.

Also, as used herein, the propylene polymer material has a weight average molecular weight of at least 100,000.

The preferred propylene polymer resins for the present invention are those propylene polymer resins which are branched or lightly cross-linked polymer materials. Branching (or light cross-linking) may be obtained by those methods generally known in the art, such as chemical or irradiation branching/light cross-linking. One such resin which is prepared as a branched/lightly cross-linked propylene polymer resin prior to using the propylene polymer resin to prepare a finished propylene polymer resin product and the method of preparing such a propylene polymer resin is described in United States Patent Number 4,916,198. Another method to prepare branched/lightly cross-linked propylene polymer resin is to introduce chemical compounds into the extruder, along with a propylene polymer resin (preferably unbranched and non-lightly cross-linked) and allow the branching/lightly cross-linking reaction to take place in the extruder. United States Patent Number 4,714,716 illustrates this method.

A propylene polymer material or blend of propylene polymer materials is melt processed in a conventional manner by feeding, melting, and metering it in a conventional melt processing apparatus such as an extruder. A volatile blowing agent and an optional crosslinking agent are mixed with the propylene polymer material under pressure to form a flowable gel or admixture. The crosslinking agent, if added, is added in an amount which is sufficient to initiate crosslinking and raise the pressure of the gel or admixture to less than that pressure which causes melt fracture of the polymer to occur. "Melt fracture" is a term used in the art to describe a melt flow instability of a polymer as it is extruded through a die which flow instability causes voids and/or other irregularities in the final product.

Suitable branching/crosslinking agents for use in extrusion reaction processes have been found to include azido and vinyl functional silanes, organic peroxides and multifunctional vinyl monomers.

It is also possible to add various additives such as inorganic fillers, pigments, antioxidants, ultraviolet absorbers, flame retardants, processing aids.

One additive which is not necessary but is generally desirable in some circumstances, is a nucleating agent as is generally known in the art.

As a nucleating agent optionally used in this invention for controlling dispersion and size of cells, there can be referred to inorganic substances such as calcium carbonate, talc, clay, titanium oxide, silica, barium sulfate, diatomaceous earth ; carbon dioxide generator by the combination of a bicarbonate or a carbonate of sodium, potassium, ammonium or the like and an inorganic or organic acid such as boric acid, citric acid, tartaric acid or the like; thermal decomposition type chemical foaming agents such as azodicarbonamide, benzenesulfonyl hydrazide, toluenesulfonyl hydrazide; and so on. Among them, finely pulverized products of inorganic substances such as calcium carbonate, talc are relatively preferable in that they have no restriction as to extrusion temperature.

The amount of said nucleating agent may be appropriately selected from the range of 0.01-5 parts by weight per 100 parts by weight of polypropylene resin. In this range, the most preferable amount is 0.1-3 parts by weight. In general, an increased amount of nucleating agent gives a smaller diameter of cell. However, if the amount exceeds 5 parts by weight, agglomeration or insufficient dispersion of nucleating substance occurs, so that the diameter of the cell becomes greater. On the contrary it the amount is less than 0.01 part by weight, the nucleating action is too feeble to decrease the diameter of the cells.

The volatile foaming agents usable in this invention generally have a boiling point temperature range of -50°C to +50°C and include, but are not limited to aliphatic hydrocarbons such as n-pentane, iso-pentane, neo-pentane, isobutane, n-butane, propane; fluoro-chlorinated hydrocarbons such as dichlorotetrafluoroethane, trichlorotrifluoroethane, trichloromonofluoromethane, dichlorodifluoromethane, dichloromonofluoromethane; and so on. Among them, the non-fully halogenated hydrocarbons are preferable in point of environmental considerations. Particularly preferred among the non-fully halogenated hydrocarbons are partially fluorinated hydrocarbons and non-fully fluoro-chlorinated hydrocarbons. Examples of these include 1-chloro-1, 1-difluoroethane and 1,1-difluoroethane. Particularly preferred among the aliphatic hydrocarbons is isobutane and isobutane/n-butane mixtures. Also contemplated are combinations of these blowing agents with minor amounts of $CO_2$, $H_2O$, $N_2$ and argon in the mixtures. Also decomposable blowing agents, such as azobisformamide, may be incorporated with the volatile foaming agents. Mixtures of any or all of these volatile foaming agents are also contemplated within the scope of this invention.

From the viewpoint of foaming workability and quality of foamed product, the amount of foaming agent added to the propylene polymer resin is preferably in the range of 0.05-0.5 pound-moles per 100 pounds by weight of propylene polymer resin. Typically, the amount of foaming agent incorporated into the propylene polymer resin depends on the desired foam density. In general, incorporation of a greater amount of foaming agent results in a higher expansion ratio (the term "expansion ratio" herein referred to means the ratio (density of resin)/(density of expanded product)) and thus a lower foam density. However care must be taken not to incorporate an amount of foaming agent that causes a separation between resin and foaming agent in the extruder. When this happens, "foaming in the die" occurs, the surface of the expanded product becomes rough and no good expanded product is obtainable.

The propylene polymer foam of the present invention is a closed-cell foam, which means that for the purpose of the present invention eighty percent or greater of the cells are closed. Closed-cell content is measured in any conventionally known manner.

Surprisingly it has been found that a combination of propylene polymer resin properties and final propylene polymer foam product properties are required to produce the closed cell propylene polymer foam of the present invention.

The foamability factor is the combination of these properties. This factor is expressed by the following equation:

$$F = \rho_f * D * (\tan \delta)^{0.75} \leq 1.8 \qquad \text{(Equation 1)}$$

where

F is the foamability factor

$\rho_f$ is the density of the foam in pounds per cubic foot;

D is the average cell size diameter in millimeters;

tan $\delta$ is g"/g'; where

g" is the loss modulus; and
g' is the storage modulus of the polymer melt using 2.5 mm thick and 25 mm diameter specimens at 190° C (centigrade) at one radian per second oscillating frequency.

The foamability factor must be less than or equal to 1.8 for the foam to have at least eighty percent closed-cells. Preferably the foamability factor is less than or equal to 1.5.

The parameter tan $\delta$ may be determined by using a mechanical spectrometer, such as model RMS-800, available from Rheometrics, Inc. in Piscataway, New Jersey, United States of America.

In the evaluation of rheological characteristics, such as tan $\delta$, g' and g", of viscoelastic materials, such as polymer melts, a disk-like specimen, measuring 2.5mm in thickness and 25 mm in diameter is placed between opposed, axially spaced apart, radially-extending surfaces and is coupled to each surface, filling the axial spacing between the surfaces. One of the surfaces then is rotated in the axial direction relative to the other to place the test specimen in shear and the torque resulting from the shear is measured. The shear may be steady shear, in which case the measured torque is constant, or the shear may be dynamic shear, in which case the measured torque changes continuously with time. The measured torque is proportional to the viscous, or loss component of the modulus (g") of the material. For the purpose of this invention the shear is steady shear, meaning the measured torque, and thus g", is constant at the given temperature. As a result of the nature of the forces applied to the test specimen in this procedure, the test specimen has a tendency to expand axially, thereby placing axially directed forces upon the relatively rotating surfaces to which the specimen is coupled. This axial force exerted upon the surfaces by the test specimen under shear conditions is proportional to the elastic, or storage component of the modulus (g') of the material. The parameter tan $\delta$ for the present invention is then calculated as g" divided by g' at the stated temperature and oscillating frequency.

In addition to meeting the requirements of Equation 1, the mixture of the blowing agent and propylene polymer material (foaming gel) must be cooled down to the optimum foaming temperature, which is easily determined experimentally. That is, the foam meeting the requirement as described by Equation 1 does not necessarily end up with a closed cell foam if the foaming gel is not optimally cooled. In other words, Equation 1 is a necessary but not a sufficient condition to produce a closed-cell polypropylene foam.

Dimensional stability is also an important factor for closed-cell foams. In the most desirable case the foam would not shrink at all or if it did would recover its original volume in a period of minutes or hours. Thus 'foam dimensional stability' (hereafter called DS) is an important criterion for formulation acceptability.

For the purpose of this specification a foam has satisfactory DS as long as its dimensions recover substantially to the values listed here.

Dimensionally stable foam -
a foam that shrinks no more than 50 percent (minimum foam value>50 percent) and recovers to over 75 percent of the initial within a week and to over 85 percent of the initial within six months,
Preferably -
the foam shrinks no more than 35 percent and recovers to over 85 percent within a week
Most preferably -
the foam shrinks no more than 20 percent and recovers to over 90 percent within a week.

These percentage volume numbers are based on a base foam volume of the foam measured within three minutes of exit from the die.

Another condition that is preferable,but not required is that there be forming plates, consisting of two flat surfaces which are lubricated or covered with a material, such as polytetrafluoroethylene, to reduce friction and prevent sticking, after the die to constrain the foam exiting from the die. The use of such forming plates increases the foam cross-section and cell size and produces a foam product having an unfolded and smooth surface appearance. Surprisingly while the forming plates worked well for the closed-cell polypropylene polymer material foam, the forming plates caused a ragged surface and an increase in density when used to make a low density polyethylene foam.

The following Examples illustrate the present invention.

Example I (not an example of the invention)

The equipment used in this example is a 1 inch (2.5 centimeters (cm)) screw type extruder having additional zones of mixing and cooling at the end of usual sequential zones of feeding, melting and metering. An opening for blowing agent is provided on the extruder barrel between the metering and mixing zones. At the end of the cooling zone, there is attached a die orifice having an opening of rectangular shape. The height of the opening, hereinafter called die gap, is adjustable while its width is fixed at 0.145 inch (3.68 mm (millimeter)).

Granular polypropylene resin was selected from the group presented in Table Ia.

TABLE Ia

| Resin Designation | Resin Type (1) | Resin Class. (2) | M.F.R. (dg/min) (3) | tan $\delta$ (4) | Remarks (5) |
|---|---|---|---|---|---|
| A | H | C | 0.2 | 1.22 | Profax 6823 |
| B | H | HMS | 0.25 | 0.71 | Escorene PD-5291 |
| C | BC | C | 0.4 | 1.63 | Profax 7823 |
| D | RC | C | 0.5 | 1.31 | Developmental |
| E | H | HMS | 0.5 | 0.84 | Developmental |
| F | H | HMS | 0.65 | 1.09 | Developmental |
| G | RC | HMS | 0.8 | 1.17 | Developmental |
| H | RC | C | 1.5 | 1.51 | 7235 by Fina |
| I | RC | C | 2 | 1.69 | 7300 MF by Quantum |
| J | RC | C | 3 | 1.83 | 7300 KF by Quantum |
| K | RC | C | 5 | 2.04 | 3303 Gk by Quantum |
| L | RC | HMS | 6.7 | 1.88 | Developmental |
| M | RC | C | 7 | 2.64 | Dypro W-756 |
| N | RC | HMS | 8 | 1.46 | Developmental |

Notes:
(1) H = homopolymer, BC = block copolymer of 5-10 percent ethylene and 90-95 percent propylene, RC = random copolymer of 2-4 percent ethylene and 96-98 percent propylene
(2) C = conventional resins, HMS = high melt strength resins
(3) Melt flow rate determined per ASTM D 1238 Condition L
(4) tan $\delta$ = loss modulus/storage modulus determined on a model RMS-800 mechanical spectrometer by Rheometric, Inc. with 2.5 mm thickness and 25 mm diameter specimens on parallel plates at 190°C at one radian per second oscillating frequency
(5) Profax = Trademark of Himont United StatesA., Inc. Escorene = Trademark of Exxon Chemical Americas Fina = Final Oil & Chemical Co. Ouantum = Ouantum Chemical Corp. Dypro = Trademark of Arco Chemical Co. Developmental = developmental resins made by Himont United StatesA., Inc.

The granular polypropylene resin was fed into the extruder at a uniform rate of approximately 4 pounds per hour (lbs/hr) (1.8 kilograms per hour (kgh)). The temperatures maintained in the extruder zones were 130°C (centigrade) at feeding zone, 190°C at melting zone, 210°C at metering zone and 220°C at the mixing zone. A predetermined blowing agent mixture consisting of HCFC-142b (1-chloro-1, 1-difluoroethane) and EtCl (ethyl chloride) was prepared in a weigh tank and injected under pressure into the mixing zone at a predetermined uniform rate which ranged from 0.16 lb-moles (pound-moles) of blowing agent mixture per one hundred lbs (pounds) of polymer (abbreviated mph hereinafter) to 0.28 mph. For each polymer, the foaming test was started with a high level of blowing agent and the level was reduced down to the lower levels of blowing agent. For some tests, a small amount of talcum powder was mixed in the polymer for cell size control. The temperature of the cooling zone was maintained so that the polymer/blowing agent mixture could reach an optimum foaming temperature. The foaming temperature varied widely among the polymers and ranged from 130°C to 156°C.

Once a best foaming condition was reached for the given formulation, the die gap was adjusted to provide a foam strand free from prefoaming. This foam strand had a smooth skin. At the threshold die gap for prefoaming, foam samples were saved and aged at ambient temperature. Foam density, cell size, open cell content, and foam cross-sectional area were determined with foam specimens aged for at least one month. Tan delta (tan $\delta$) values were determined with the virgin resins on a model RMS-800 mechanical spectrometer (manufacture by Rheometrics, Inc.) during temperature sweep at one radian per second oscillating frequency. The parallel plates configuration was employed and the test specimens had been molded at 180°C into disks of 2.5 mm in thickness and 25 mm in diameter.

Table Ib summarizes the results of this Example I.

## TABLE Ib

| Test No. | Resin Designation | M.F.I. (1) | tanδ (2) | Blowing Agent | | Talc Level (5) | Foam Density (ρf)(6) | Cell Size (7) | (ρf)•D (8) | Open Cell (9) | Cross-sectional Area (10) |
|---|---|---|---|---|---|---|---|---|---|---|---|
| | | | | Ratio (3) | Level (4) | | | | | | |
| *A.1 | A | 0.2 | 1.22 | 60/40 | 0.22 | - | 1.39 | 0.43 | 0.60 | 6 | 0.7 |
| *B.1 | B | 0.25 | 0.71 | 60/40 | 0.22 | - | 1.34 | 1.01 | 1.35 | 8 | 1.4 |
| *B.2 | | | | 60/40 | 0.22 | 0.03 | 1.35 | 0.62 | 0.84 | 7 | 1.0 |
| *B.3 | | | | 60/40 | 0.19 | 0.1 | 1.49 | 0.62 | 0.92 | 9 | 1.1 |
| *B.4 | | | | 60/40 | 0.22 | - | 1.35 | 2.03 | 2.74 | 59 | 1.94 |
| *B.5 | | | | 60/40 | 0.22 | - | 1.35 | 1.62 | 2.19 | 19 | 1.34 |
| *C.1 | C | 0.4 | 1.63 | 60/40 | 0.28 | - | 1.46 | 0.51 | 0.74 | 19 | 0.4 |
| *D.1 | D | 0.5 | 1.31 | 60/40 | 0.28 | - | 1.12 | 0.65 | 0.73 | 6 | 0.8 |
| *D.2 | | | | 60/40 | 0.22 | - | 1.44 | 0.41 | 0.59 | 6 | 0.9 |
| *D.3 | | | | 60/40 | 0.25 | 0.2 | 1.23 | 1.30 | 1.60 | 65 | 1.5 |
| *E.1 | E | 0.5 | 0.84 | 60/40 | 0.22 | - | 1.30 | 0.65 | 0.85 | 6 | 1.0 |
| *E.2 | | | | 60/40 | 0.16 | - | 1.60 | 1.08 | 1.73 | 1 | 1.3 |
| *E.3 | | | | 60/40 | 0.13 | 0.2 | 1.96 | 0.65 | 1.27 | 7 | 1.1 |
| *E.4 | | | | 60/40 | 0.13 | - | 1.97 | 1.08 | 2.13 | 67 | 1.5 |
| *F.1 | F | 0.8 | 1.09 | 60/40 | 0.22 | - | 1.35 | 0.68 | 0.92 | 0 | 0.7 |
| *F.2 | | | | 60/40 | 0.13 | - | 2.87 | 0.90 | 2.58 | 86 | 1.1 |
| *G.1 | G | 0.8 | 1.17 | 60/40 | 0.16 | 0.2 | 1.74 | 0.72 | 1.25 | 18 | 0.9 |
| *H.1 | H | 1.5 | 1.51 | 60/40 | 0.19 | 0.5 | 1.63 | 0.31 | 0.51 | 8 | 0.9 |
| *H.2 | | | | 60/40 | 0.16 | - | 1.83 | 0.26 | 0.48 | 9 | 0.9 |
| *H.3 | | | | 60/40 | 0.16 | 0.25 | 1.77 | 0.32 | 0.57 | 5 | 1.2 |
| *H.4 | | | | 60/40 | 0.16 | - | 2.66 | 0.68 | 1.81 | 87 | 1.0 |
| *I.1 | I | 2 | 1.69 | 60/40 | 0.22 | - | 1.32 | 0.81 | 1.07 | 14 | 1.1 |
| *I.2 | | | | 60/40 | 0.19 | 0.3 | 1.59 | 0.50 | 0.80 | 7 | 0.8 |
| *I.3 | | | | 60/40 | 0.19 | - | 1.87 | 1.62 | 3.03 | 64 | 1.4 |
| *J.1 | J | 3 | 1.83 | 49/51 | 0.27 | - | 1.32 | 0.74 | 0.98 | 1 | 0.8 |
| *J.2 | | | | 49/51 | 0.27 | - | 1.29 | 1.01 | 1.30 | 27 | 0.7 |
| *K.1 | K | 5 | 2.04 | 60/40 | 0.23 | - | 1.37 | 0.77 | 1.05 | 26 | 0.7 |
| *L.1 | L | 6.7 | 1.88 | 60/40 | 0.16 | - | 1.81 | 0.93 | 1.68 | 28 | 0.8 |
| *M.1 | M | 7 | 2.64 | 50/50 | 0.19 | - | 1.24 | 0.81 | 1.00 | 58 | 0.5 |
| *N.1 | N | 8 | 1.46 | 60/40 | 0.22 | - | 1.60 | 0.65 | 1.04 | 14 | 0.4 |
| *N.2 | | | | 60/40 | 0.16 | - | 2.03 | 0.93 | 1.89 | 23 | 0.5 |

NOTES:  *Not an example of this invention

(1)  Melt flow index in decigrams per minute determined per ASTM D 1238 at Condition L (230°C, 2.16 Kg)

(2)  The ratio of loss modulus to storage modulus of polypropylene melt at 190°C and one radian per second frequency determined by using a dynamic mechanical spectrometer manufactured by Rheometrics, Inc. (25 mm diameter x 2.7 mm thickness specimens with parallel plates configuration)

(3)  Molar ratio of CFC-142b/EtCl

(4)  G-moles of blowing agent mixed in per hundred grams of polymer

(5)  Parts of talcum powder mixed in per hundred parts of polymer

(6)  Foam density in pounds per cubic foot

(7)  Average cell size in millimeters determined per ASTM D 3576

(8)  Product of foam density and cell size

(9)  Open cell content in percentage determined per ASTM D 2856-A

(10)  Cross-sectional area of foam body in square centimeters

Table lb and Figure 1 indicate that a resin having a smaller tan delta is the more readily 'formable', that is, more readily produces closed-cell foam. Equation 1 with the A value of 1.8 marks well the transition between the closed-cell (open cell content < 20 percent) and open-cell foams. Some resins produce partially open-cell foams (where the open cell content is 20-50 percent) when the foam product meets equation 1 with the A value between 1.8 and 2.8. When the product of density and cell size is greater than foamability (F) of a given resin with the A value of 2.8, a substantially open cell foam (open cell content > 50 percent) is produced.

The level or amount of blowing agent also affects the production of a closed cell foam. Generally an increased amount of blowing agent produces a foam having more closed cells. A high level of blowing agent also provides a low foam density and makes the cell size smaller. As the level of blowing agent is decreased, the foam density and cell size become larger requiring the addition of a cell nucleator, such as talc. Even with addition of this nucleator, a closed cell foam is difficult to make when the blowing agent level drops below 0.13 mph.

High levels of blowing agent are not always desirable when making a foam product and can produce undesirable characteristics. For example, low density foams made with a high blowing agent level often have small cell sizes and small cross-sectional sizes. In addition, the foam may become corrugated in a transverse direction (as distinguished from the extrusion and vertical directions) because of a rapid expansion rate. Therefore, it is often desirable to use a resin having a small tan delta which allows one to operate at the maximum value of (foam density x cell size) (hereafter called DCS).

Example II

In this example, an accumulation extrusion process is beneficially used to produce a large cross-sectional polypropylene foam having a low density and small cell sizes. In this method an accumulating system is inserted after the extruder and before the die. The accumulating system can be any accumulating vessel, but in this Example it is a pressure chamber of one liter with a regulated nitrogen pressure source. The formable gel is accumulated in the chamber and pushed out by nitrogen pressure. The extruder in a 1-1/2 inch (3.8 cm) screw type having additional zones for mixing and cooling at the end of the usual sequential zones of feeding, melting and metering. An opening for the blowing agent is provided on the extruder barrel between the metering and mixing zones. At the end of the cooling zone there in an attached die orifice having an opening of retangular shape. The height, or die gap, of the opening ia adjustable. The width is fixed at 0.25 inch (6.35 mm).

Resin I in Table Ia is fed into the extruder at a uniform rate of 9.3 pounds per hour. The blowing agent mixture injected into the mixing zone is HCFC-142b/EtCl in the percentages and amounts listed in the Table II. The temperatures maintained in the extruder zones ware 120°C (centigrade) at feeding zone, 190°C at melting zone, 190°C at metering zone and 160°C at the mixing zone. The accumulator and transfer line are maintained at 138°C. The foamable gel was accumulated and shot out through the die orifice by nitrogen pressure. The results of this Example are in Table II.

TABLE II

| Test No. | Blowing Agent | | Talc Level (pph) (4) | Foam Density (pcf) (pf) (5) | Cell Size (mm) (D) (6) | $pf \cdot D$ (pcf mm) (7) | Open Cell (%) (8) | Dimensional Stability | | |
|---|---|---|---|---|---|---|---|---|---|---|
| | Ratio (Mole) (2) | Level (mph) (3) | | | | | | 1 Wk (%) (10) | 2 Wk (%) (11) | 8 Month (%) (12) |
| *II.1 | 60/40 | 0.28 | - | 1.04 | 1.41 | 1.47 | 26 | ND** | ND | ND |
| II.2 | 60/40 | 0.28 | - | 1.21 | 1.13 | 1.37 | 4 | 75 | 93 | 98 |
| II.3 | 60/40 | 0.28 | 0.2 | 1.08 | 0.77 | 0.83 | 2 | 73 | 88 | 96 |
| II.4 | 72/28 | 0.28 | 0.2 | 1.40 | 0.54 | 0.76 | 4 | 87 | 103 | 103 |

Notes:
* - Not an example of the present invention
** - Not determined
(10), (11) & (12) Volumes at 1 week, 2 weeks and 8 months as a percentage of the initial volume measured within about 30 seconds after extrusion
(2) Molar ratio
(3) Pound moles of blowing agent mixed in per hundred pounds of polymer (corresponding to kilograms per hundred kilograms of polymer)
(4) Parts of talcum powder mixed in per hundred parts of polymer
(5) Density of foam body in pounds per cubic foot (pcf) measured after six months
(6) Cell size in millimeters determined per ASTM D 3576
(7) Product of density and cell size
(8) Open cell content in percentage determined per ASTM D 2856-A

As can be seen in Table II the foams are substantially closed-cell and within dimensional stability limits (with the exception of II.1). All four examples provided good quality foams with large cross-sections, including some up to 5.9 square inches (37 square centimeters). As can also be seen in Table II dimensional stability is acceptable.

The accumulating extrusion is one of two preferred processed methods for producing the polypropylene foam products according to this invention. The other is the coalesced strand foam method. This high extrusion rate accomplished through the use of an accumulating extrusion system (AES) permits production of fold-free foam products having large cross-sections.

Example III

This example illustrates that the technology is scalable to a large foam extrusion line. The apparatus used in the example is a 3-1/2 inch (8.8 centimeters) screw type extruder having essentially the same configuration as the one employed in Example I except for the die. The apparatus is equipped with a multi-hole die having 722 holes of 0.041 inch (1.04 millimeters) diameter arranged in 38 rows and 19 columns in a equilateral triangular pattern with 0.125 inch (3.2 millimeters) distance between holes. The operating procedure of this apparatus is essentially the same as the one used in Example I.

In practice, a polypropylene homopolymer (Resin F in Table Ia) was fed into the extruder at a uniform rate of approximately 200 lbs/hr (90.8 kg/hr). The temperatures maintained at the extruder zones were 130°C at feeding zone, 200°C at melting zone, 230°C at metering zone and 230°C at mixing zone. An 80/20 by weight (72/28 by mole) mixture of HCFC-142b/EtCl was prepared in a weigh tank and injected under pressure into the mixing zone at a rate of 34 lbs/hr (15.4 kg/hr) which amounted to 17 parts per hundred parts of polymer or 0.188 mph. When the uniform mixture of the polymer/blowing agent mixture was cooled down to approximately 155°C, a good foam having fine cell size was achieved. The foam strands coalesced together leaving little noticeable interstices among them and resulted in a foam plank of 2.5 inch x 4.5 inch (6.3 cm x 11.3 cm) cross-section. The foam has 1.27 pcf density (20.3 kg/m$^3$), 0.87 mm cell and approximately 13 percent open cells. The foam had a thermal conductivity of 0.28 B.t.u./(hr)(ft$^2$)(F/in) which compares favorably with that of an extruded polyethylene foam plank which is typically 0.45 B.t.u./(hr)(ft$^2$)(F/in). With its resiliency and low thermal conductivity, the polypropylene foam product is not only useful for cushion packaging but also for insulation applications.

While embodiments of the method and the foam of the present invention have been shown with regard to specific details, it will be appreciated that depending upon the manufacturing process and the manufacturer's desires, the present invention may be modified by various changes while still being fairly within the scope of the appended claims.

## Claims

1.  An extruded, dimensionally stable, closed cell propylene polymer foam comprising a propylene polymer resin having a melt flow index of less than 10 decigrams/minute at 230° C, the foam having a density of less than 80 kilograms per cubic meter (5 pounds per cubic foot), the foam having greater than 80 percent closed cells, the foam being characterized in that it has a foamability characteristic (F) of less than or equal to 1.8, the foam having a minimal cross sectional area of at least 32.3 square centimeters (5 square inches), the foam having a minimal thickness dimension of at least 12.7millimeters, the foam being a plank foam.

2.  The foam of Claim 1, wherein the foamed product has a foamibility characteristic (F) of less than or equal to 1.5.

3.  The foam of any of the preceding claims wherein the foamed product has a cell size of less than 4 millimeters and greater than 0.05 millimeters.

4.  The foam of any of the preceding claims, wherein the foamed product is in the form of individual coalesced strands.

## Patentansprüche

1.  Extrudierter dimensionsstabiler geschlossenzelliger Propylenpolymerschaum, umfassend ein Propylenpolymerharz mit einem Schmelzfließindex von weniger als 10 Dezigramm/Minute bei 230°C, wobei der Schaum eine Dichte von weniger als 80 Kilogramm pro Kubikmeter (5 pounds per cubic foot) hat, der Schaum mehr als 80% geschlossene Zellen besitzt, der Schaum dadurch gekennzeichnet ist, daß er eine Schäumbarkeitscharakteristik (F) von weniger als oder gleich 1,8 hat, der Schaum eine minimale Querschnittsfläche von wenigstens 32,3 Quadratzentimeter (5 square inches) hat, der Schaum eine minimale Dickenabmessung von 12,7 Millimeter hat, der Schaum ein Plattenschaum ist.

2.  Schaum nach Anspruch 1, wobei das geschäumte Produkt eine Schäumbarkeitscharakteristik (F) von weniger als oder gleich 1,5 hat.

3.  Schaum nach eine der vorhergehenden Ansprüche, wobei das geschäumte Produkt eine Zellgröße von weniger als 4 Millimeter und größer als 0,05 Millimeter hat.

4.  Schaum nach einem der vorhergehenden Ansprüche, wobei das geschäumte Produkt in Form von individuellen koaleszierten Strängen vorliegt.

**Revendications**

1. Mousse extrudée de polymère de propylène, à cellules fermées et de dimensions stables, comprenant une résine de polymère de propylène dont l'indice de fluidité à chaud est inférieure à 10 décigrammes/minute à 230°C, cette mousse présentant une masse volumique inférieure à 80 kilogrammes par mètre cube (5 livres par pied cube) et contenant plus de 80 % de cellules fermées, et cette mousse étant caractérisée en ce qu'elle présente un paramètre d'aptitude au moussage F inférieur ou égal à 1,8, l'aire minimale de la section transversale de l'objet en mousse valant au moins 32,3 centimètres carrés (5 pouces carrés) et l'épaisseur minimale de l'objet en mousse valant au moins 12,7 millimètres, l'objet en mousse étant une plaque de mousse.

2. Mousse conforme à la revendication 1, l'article expansé présentant un facteur d'aptitude au moussage F inférieur ou égal à 1,5.

3. Mousse conforme à l'une des revendications précédentes, le produit expansé présentant des cellules d'une taille inférieure à 4 mm et supérieure à 0,05 mm.

4. Mousse conforme à l'une des revendications précédentes, l'article expansé se présentant sous la forme de boudins individuels réunis par coalescence.

FIG. 1